# EUROPÄISCHE PATENTANMELDUNG

(11) **EP 0 582 730 A1**
(43) Veröffentlichungstag der Anmeldung: **16.02.1994**
(21) Anmeldenummer: 92113689.1
(22) Anmeldetag: 11.08.1992
(51) Int. Cl.: F24J 2/34, F24J 2/04, F28D 20/00, F24D 3/14, F24D 17/00

(54) **Plattenelement**

(71) Anmelder: Bossert, Gerdi, D-78052 Villingen-Schwenningen (DE)
(72) Erfinder: Bossert, Karl, W-7730 VS Villingen (DE)
(74) Vertreter: Liska, Horst, Dr.-Ing.

(57) **Zusammenfassung**

Es wird vorgeschlagen, zumindest eines der zur Ausfachung von Zwischenräumen zwischen Skelettstreben (1, 5) eines Gebäudes mit zumindest teilweise in Skelettbauweise zu errichtenden Wänden (3) oder Dachflächen (7) vorgesehenen Plattenelemente als flachen Flüssigkeitsbehälter (9) auszubilden. Der Flüssigkeitsbehälter (9) kann als Brauchwasserspeicher oder Warmwasserbehälter einer Warmwassererzeugungsanlage oder Wärmepufferspeicher einer Heizungsanlage (13) des Gebäudes ausgenutzt werden. Durch Ausnutzen der Zwischenräume zwischen benachbarten Skelettstreben (1, 5) kann der Platz innerhalb des Gebäudes optimal genutzt werden.

## Beschreibung

Die Erfindung betrifft ein Plattenelement für den Bau einer Wand, insbesondere einer Außenwand oder eines Dachs eines zumindest zum Teil in Skelettbauweise zu errichtenden Gebäudes, bei welchem das Plattenelement einen Zwischenraum zwischen benachbarten Skelettstreben des Gebäudes ausfacht.

Es ist bekannt, insbesondere Industriebauten in Fachwerk- oder Skelettbauweise zu errichten, und die zwischen benachbarten Stützpfeilern der Wände oder zwischen benachbarten Dachsparren sich ergebenden Flächen durch Plattenelemente auszufachen, die dann die eigentliche Wand oder das Dach bilden. Bei den bisherigen Konstruktionen bestehen die Plattenelemente beispielsweise aus Gasbeton oder aus Holzelementen in Sandwich-Bauweise. Soweit für die Gebäudeheizung oder für Warmwasseranlagen Speicherbehälter vorgesehen sind, wurden diese zumeist im Inneren des Gebäudes aufgestellt, wo sie vergleichsweise viel Platz beanspruchten.

Aus EP 22 126 ist es bekannt, konstruktiv bedingte Nischen eines Gebäudes, wie sie sich beispielsweise unter der Bodenplatte eines Balkons oder dergleichen ergeben können, zur Unterbringung eines Wärmespeichers einer Heiz- oder Klimatisierungsanlage auszunutzen. Die Wärmespeicher werden jedoch nicht als Konstruktionselement der Wände ausgenutzt.

Aus DE-A-2 245 153 ist es bekannt, die Innenseite und die Außenseite eines Dachs mit einer Vielzahl Flüssigkeitskanäle zu belegen, über die Wärme für die Gebäudeheizung von außen nach innen oder für die Gebäudekühlung von innen nach außen geführt werden kann. Ein Teil der Kanalkonstruktion wird hierbei zur Wärmespeicherung ausgenutzt.

Schließlich ist es aus dem US-Patent 3 994 278 bekannt, auf einem Wellblech-Flachdach einen nach oben durch eine durchsichtige Abdeckung abgedeckten Wasserspeicherbehälter anzuordnen, auf dessen teilweiser Füllung ein Trog schwimmt. Mittels einer Pumpe kann das Wasser aus dem Behälter in den Trog gepumpt werden, wo es durch die durchsichtige Abdeckung hindurch von der Sonne erwärmt wird. Das erwärmte Wasser strömt aus Überströmöffnungen wieder zurück in den Behälter.

Es ist Aufgabe der Erfindung, einen Weg zu zeigen, wie bei zumindest teilweise in Skelettbauweise errichteten Gebäuden der Platzbedarf für Flüssigkeitsbehälter der Hausinstallation verringert werden kann.

Diese Aufgabe wird erfindungsgemäß dadurch gelöst, daß das eingangs erläuterte, zur Ausfachung der Skelett-Zwischenräume des Gebäudes vorgesehene Plattenelement als flacher, bis auf Öffnungen für Zufluß und Abfluß geschlossener Flüssigkeitsbehälter ausgebildet ist.

Der Erfindung liegt die Idee zugrunde, den zwischen benachbarten Skelettstreben verfügbaren Platz zur Unterbringung flacher Flüssigkeitsbehälter auszunutzen. Die Flüssigkeitsbehälter übernehmen zugleich die Wand- oder Dachfunktion, was die optische, akustische und thermische Isolierung anbelangt, während die statischen Eigenschaften durch die Skelettbauweise des Gebäudes gegeben sind. Es versteht sich jedoch, daß die Flüssigkeitsbehälter so bemessen sein können, daß sie Schubkräfte des Gebäudes in ihrer Flachebene aufnehmen können. Zweckmäßigerweise füllen die Flüssigkeitsbehälter den Zwischenraum zwischen den Skelettstreben über die gesamte Abstandbreite vollständig aus. Die Wand oder das Dach kann selbstverständlich zusätzlich mit einer Isolierung und/oder einer die Wand- oder Dachhaut bildenden Fassadenverkleidung oder - belegung oder -abdeckung versehen sein.

Je nach der Flächengröße der auszufachenden Felder können auch mehrere Flüssigkeitsbehälter im wesentlichen unmittelbar einander benachbart zwischen benachbarten Skelettstreben angeordnet sein. Dies hat den Vorteil, daß in einer Art Modulbauweise Flüssigkeitsbehälter gleicher oder unterschiedlicher Flachseitengröße in gemeinsamen Ausfachungsebenen angeordnet werden können.

Die Flüssigkeitsbehälter können unterschiedlichen Zwecken dienen. In einer bevorzugten Ausgestaltung ist zumindest eines der Plattenelemente als flacher Brauchwasser-Speicherbehälter einer Brauchwasser-Versorugngsanlage des Gebäudes ausgebildet. Der Brauchwasserbehälter kann beispielsweise an eine Dachentwässerungsanlage des Gebäudes angeschlossen sein, um so Regenwasser für Brauchwasserzwecke, beispielsweise für die Toilettenspülung, zu sammeln. Zweckmäßigerweise sind mehrere dieser Brauchwasserbehälter zu einem gemeinsamen Brauchwasserspeicher verbunden.

In anderen bevorzugten Nutzungsart bildet zumindest eines der Plattenelemente ein Wärmespeicherelement insbesondere einer Warmwassererzeugungsanlage oder einer Raumheizungsanlage des Gebäudes. Auf diese Weise läßt sich der Warmwasserboiler oder dergleichen der Warmwassererzeugungsanlage in den Wand- oder Dachaufbau des Gebäudes platzsparend integrieren. Entsprechendes gilt für die Nutzung des Wärmespeicherelements als Wärmepuffer der Heizungsanlage des Gebäudes. Da zwischen den Skelettstreben vergleichsweise viel Platz vorhanden ist, lassen sich auch großvolumige Wärmespeicher bereitstellen. Selbst auf vergleichsweise niedrigem Temperaturniveau lassen sich so große Wärmemengen speichern, was insbesondere bei Wärmepumpenheizungsanlagen von Vorteil ist.

Das vergleichsweise große erreichbare Volumen der Wärmespeicherelemente ist insbesondere auch für die Wärmespeicherung von Solarwärme geeignet, wofür der Flüssigkeitsbehälter in Wärmeübertragungsverbindung mit wenigstens einem Solarwärmekollektor steht. Die Wärmeübertragungsverbindung kann eine Flüssigkeitskreislaufverbindung sein, gegebenenfalls in Verbindung mit einer Wärmepumpe. In einer bevorzugten Ausgestaltung, bei welcher der Flüssigkeitsbehälter Bestandteil des Dachs ist, steht er in unmittelbarem flächigen Wärmekontakt mit dem Solarwärmekollektor. Der Solarwärmekollektor bildet mit anderen Worten die Dachaußenfläche des zwischen den Dachsparren angeordneten Flüssigkeitsbehälters.

Je nach dem Anwendungszweck kann der Flüssigkeitsbehälter auf einer seiner beiden Flachseiten oder auf beiden Flachseiten mit einer thermischen Isolierung versehen sein. Wird der Flüssigkeitsbehälter als Wärmespeicher oder Boiler für die Warmwassererzeugung ausgenutzt, so ist er zweckmäßigerweise auf beiden Flachseiten isoliert.

Bei der Verwendung als Pufferspeicher einer Heizungsanlage des Gebäudes läßt sich der Flüssigkeitsbehälter zugleich als Heizungskonvektor oder Radiator mit ausnutzen. Der Flüssigkeitsbehälter ist hierzu zweckmäßigerweise auf seiner Gebäudeinnenseite mit einer Wärmetauschfläche, beispielsweise in Form einer Vielzahl von Rippen, versehen und auf seiner gebäudeäußeren Seite mit einer thermischen Isolierung. Die Wärmetauschfläche kann auf der Gebäudeinnenseite unter Bildung eines Belüftungskanals abgedeckt sein, so daß die Wärmeabgabe beispielsweise durch einen elektrisch steuerbaren Lüfter oder dergleichen, gegebenenfalls auch durch eine Klappe, mechanisch gesteuert werden kann.

In einer bevorzugten Ausgestaltung umfaßt zumindest einer der Flüssigkeitsbehälter wenigstens zwei mit ihren Flachseiten sich gegenüberliegende Flachbehälter zur gesonderten Speicherung von Flüssigkeit, wobei zwischen den Flachbehältern eine thermische Isolierschicht, insbesondere eine Platte aus thermisch isolierendem Material angeordnet ist. Die beiden Flachbehälter sind einschließlich der dazwischen angeordneten Isolierschicht zu einer für sich handhabbaren Baueinheit verbunden, was die Montage in dem Gebäude erleichtert. Da die beiden Flachbehälter thermisch voneinander isoliert sind, kann Warme auf unterschiedlichem Temperaturniveau gespeichert werden, was eine Vielzahl Anwendungsfälle eröffnet. Für die Warmwasserbereitung können größere Mengen Wasser vorerwärmt in einem der Flachbehälter gespeichert werden, während der andere Flachbehälter zur Speicherung von Heißwasser mit erhöhter Tempertaur ausgenutzt wird. Für die Vorerwärmung des Wassers kann Abwärme zum Kühlen der Geräte ausgenutzt werden, was insbesondere bei Industriebauten Kühlanlagen erübrigen hilft; es können aber auch Sonnenkollektoren oder dergleichen zur Brauchwasservorerwärmung eingesetzt werden. Die Bereitung von Heißwasser mit erhöhter Temperatur kann wie üblich durch elektrische Heizeinrichtungen, die zweckmäßigerweise direkt in dem Flachbehälter angeordnet sind, oder aber über Heizregister der Gebäudeheizung erfolgen.

In einer bevorzugten Ausgestaltung ist einer Flachbehälter der Außenseite des Gebäudes und der andere Flachbehälter der Innenseite des Gebäudes zugekehrt zwischen den Skelettstreben angeordnet. Die Flachbehälter sind mit Wärmeübertragungsmitteln verbunden, die die Übertragung des Flüssigkeitswärmeinhalts des äußeren Flachbehälters in den inneren Flachbehälter oder des inneren Flachbehälters in den äußeren Flachbehälter ermöglichen. Wird Wärme von innen nach außen geführt, kann das Gebäudeinnere gekühlt werden; im umgekehrten Fall kann das Gebäudeinnere geheizt werden. In beiden Fällen kann der die Wärme aufnehmende Flachbehälter als Wärmespeicher die aufgenommene Wärme für spätere Nutzung in umgekehrter Richtung oder zur Erzeugung von warmem Brauchwasser speichern. Die Wärmeübertragungsmittel können einen direkten Flüssigkeitskreislauf zwischen den Flachbehältern gegebenenfalls in Verbindung mit einer Umwälzpumpe umfassen. Die Wärmeübertragungsmittel können jedoch auch eine Wärmepumpe umfassen, durch die das Temperaturniveau auf der Seite des wärmeaufnehmenden Flachbehälters erhöht wird.

In einer bevorzugten Ausgestaltung ist der innere Flachbehälter mit einem Heizkörper oder mit Fußbodenheizrohren direkt oder über einen in dem inneren Flachbehälter angeordneten Wärmetauscher verbunden, und die Wärmeübertragungsmittel übertragen den Wärmeinhalt vom äußeren auf den inneren Flachbehälter. Insbesondere wenn die Wärmeübertragungsmittel eine Wärmepumpe enthalten, kann auf diese Weise der äußere Flachbehälter als Wärmekollektor der Gebäudeheizung ausgenutzt werden, wahrend der innere Flachbehälter einen Wärmepufferspeicher der Gebäudeheizung bildet, aus welchem die eigentlichen, den Innenraum des Gebäudes heizenden Heizkörper bzw. Fußbodenheizrohre gespeist werden.

Zweckmäßigerweise sind auf der Außenseite des äußeren Flachbehälters und im Abstand davon Fassadenverkleidungsplatten angeordnet, die zusammen mit dem äußeren Flachbehälter Sonnenkollektoren bilden. Auch können zwischen der Außenseite des äußeren Flachbehälters und den Fassadenverkleidungsplatten Wärmetauschrohre oder dergleichen angeordnet sein, die zusammen mit dem äußeren Flachbehälter eine Wärmequelle für eine den inneren Flachbehälter speisende Wärmepumpe bilden.

Der Flüssigkeitsbehälter kann zum Beispiel aus Stahlblech gefertigt sein. In einer bevorzugten Ausgestaltung besteht er jedoch aus Kunststoff, so daß er mit geringem Kostenaufwand in Serie hergestellt werden kann.

Die Wärmespeicherkapazität des als Wärmespeicherelement, beispielsweise als Wärmepuffer der Gebäudeheizungsanlage benutzten Flüssigkeitsbehälters, wird durch die in dem Behälter sich befindende Flüssigkeit, beispielsweise Wasser, bestimmt. Um die bei gegebenem Volumen in dem Wärmespeicherelement speicherbare Wärmemenge zu erhöhen, oder die Wärmeaufnahme- oder Wärmeabgabeeigenschaften des Speichers zu verbessern, hat es sich als zweckmäßig erwiesen, wenn in dem Flüssigkeitsbehälter wenigstens ein in Wärmetauschkontakt mit der Flüssigkeit stehender Wärmespeicherkörper aus festem, insbesondere mineralischem Material angeordnet ist. Wärmespeicherkörper dieser Art lassen sich auch bei Flüssigkeitsbehältern anderer Art, beispielsweise bei herkömmlichen Pufferspeichertanks, mit Vorteil einsetzen, wenngleich die Form eines Plattenelements und insbesondere eines zur Ausfachung von Wand- oder Dachfeldern eines Gebäudes in Skelettbauweise auszunutzenden Plattenelements bevorzugt ist. Der Idee fester Wärmespeicherkörper in einem als Wärmespeicherelement ausgenutzten Flüssigkeitsbehälter kommt deshalb selbständige erfinderische Bedeutung zu.

Bei dem Wärmespeicherkörper kann es sich um eine die Wandfläche des Flüssigkeitsbehälters zumindest teilweise auskleidenden Körper handeln. In einer bevorzugten Ausgestaltung ist jedoch in dem Flüssigkeitsbehälter eine Vielzahl im Abstand voneinander angeordneter Wärmespeicherköper angeordnet, um so die Wärmetauschflächen zwischen Flüssigkeit und Wärmespeicherkörper zu vergrößern. Soweit der Flüssigkeitsbehälter als flacher, im wesentlichen plattenförmiger Behälter ausgebildet ist, erstrecken sich die Wärmespeicherkörper vorzugsweise im Abstand nebeneinander zwischen den Flachseitenwänden des Behälters. Bei den Wärmespeicherkörpern kann es sich beispielsweise um zueinander parallele Zylinder handeln. Als Material für die Wärmespeicherkörper wird zweckmäßigerweise gebrannter Ton, Schamotte oder Keramik eingesetzt.

Im folgenden wird die Erfindung anhand einer Zeichnung näher erläutert. Hierbei zeigt:
- Fig. 1: eine schematische teilweise Perspektivdarstellung eines in Skelettbauweise unter Verwendung erfindungsgemäßer Plattenelemente errichteten Gebäudes;
- Fig. 2: eine teilweise aufgebrochene, perspektivische Darstellung eines als Wärmespeicherelement einer Warmwassererzeugungsanlage des Gebäudes verwendbaren Plattenelements;
- Fig. 3: eine Schnittansicht durch ein als Wärmespeicherelement einer Heizungsanlage des Gebäudes ausgenutztes Plattenelement;
- Fig. 4: eine Schnittansicht durch ein zu einer Einheit mit einem Solarwärmekollektor verbundenes, als Wärmespeicherelement ausgenutztes Plattenelement,
- Fig. 5: eine Variante eines als Wärmespeicherelement ausgenutzten Plattenelements und
- Fig. 6: schematisch und teilweise im Schnitt ein aus zwei Flachbehältern aufgebautes Plattenelement, insbesondere für die Verbindung mit einer Gebäudeheizanlage und
- Fig. 7: einen schematischen Schnitt durch eine Variante des Plattenelements auf Fig. 6.

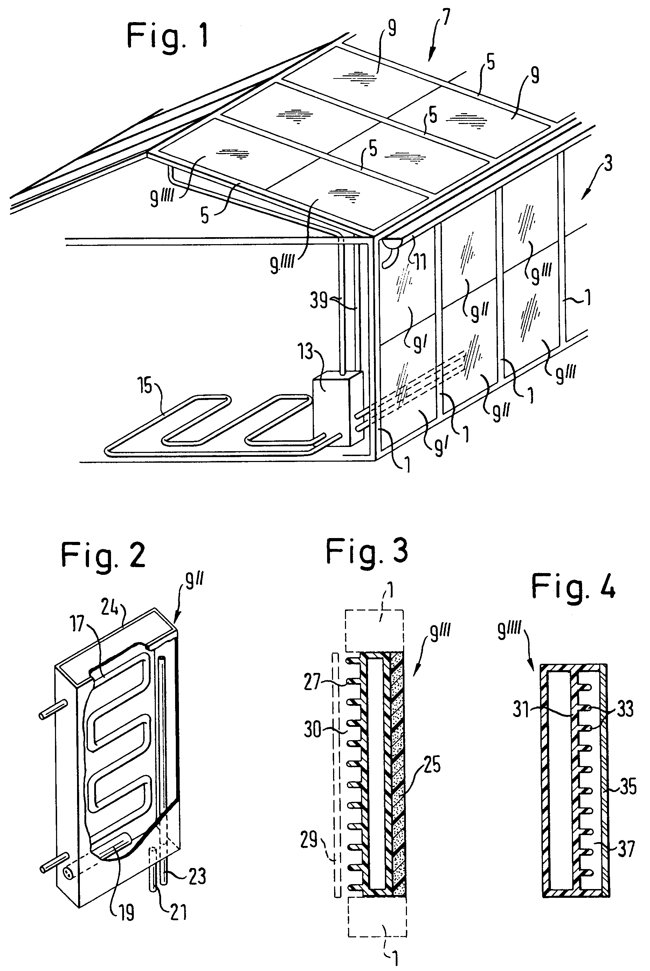

Fig. 1 zeigt ein in Skelettbauweise errichtetes Gebäude, bei welchem ein Skelett aus vertikalen, zueinander parallelen Stützen 1 den Verlauf zumindest einer Wand 3 festlegt, während zueinander parallele Sparren 5 die Ebene eines Dachs 7 bestimmen. Die Stützen 1 bzw. die Sparren 5 begrenzen zwischen sich jeweils Öffnungen, die durch allgemein mit 9 bezeichnete Plattenelemente zu einer geschlossenen Wand- bzw. Dachfläche ausgefacht sind.

Zumindest ein Teil der Plattenelemente ist als flacher Flüssigkeitsbehälter ausgebildet, der den zwischen den Stützen 1 bzw. den Sparren 5 vorhandenen Platz über die Breite des Zwischenabstands im wesentlichen vollständig ausnutzt. Wie Fig. 1 zeigt, sind in Längsrichtung der Stützen 1 bzw. Sparren 5 jeweils mehrere derartiger Flüssigkeitsbehälter 9 unmittelbar benachbart angeordnet.

Die Flüssigkeitsbehälter 9 dienen unterschiedlichen Anwendungen. Eine erste Anwendungsvariante besteht in der Speicherung von Brauchwasser, beispielsweise für die Toilettenspülung. Zur Gewinnung des Brauchswassers ist eine Dachentwässerungsanlage 11 (Regenrinne) mit mehreren untereinander verbundenen Flüssigkeitsbehältern 9' verbunden, in welchen das Brauchwasser gespeichert werden kann. Weitere Flüssigkeitsbehälter 9'' bilden in einer zweiten Anwendungsvariante Wärmespeicherelemente bzw. Speicherbehälter einer Warmwassererzeugungsanlage. In einer dritten Anwendungsvariante bilden Wärmespeicherelemente 9''' Wärmepufferspeicher für eine Heizungsanlage 13 des Gebäudes. Die vorstehend erwähnten Anwendungsvarianten der Flüssigkeitsbehälter sind in Fig. 1 als Bestandteil der Wand 3 dargestellt. Es versteht sich, daß auch Flüssigkeitsbehälter des Dachs 7 insbesondere für die Wärmespeicherelemente der Warmwassererzeugungsanlage und der Heizungsanlage eingesetzt werden können. Die vergleichsweise großen, für die Flüssigkeitsbehälter 9 zur Verfügung stehenden Flächen erlauben es, ohne Verringerung des im Inneren des Gebäudes zur Verfügung stehenden Platzes vergleichsweise große Speichervolumina unterzubringen. Dies ist insbesondere für die Anwendungsvariante als Wärmepufferspeicher der Gebäudeheizung 13 von Vorteil, die damit bevorzugt als Niedertemperaturheizungsanlage speziell für eine Fußbodenheizung 15 bemessen sein kann. Zweckmäßigerweise handelt es sich bei der Heizungsanlage 13 um eine Wärmepumpenanlage, bei welcher ein Teil der Plattenelemente des Dachs 7 mit Solarwärmekollektoren versehen ist.

Fig. 2 zeigt Einzelheiten eines Wärmespeicherelements 9'' der Warmwasserversorgungsanlage. In dem als flacher Rechteckquader ausgebildeten Flüssigkeitsbehälter ist ein bei 17 angedeuteter Wärmetauscher der Heizungsanlage 13 bzw. eines der auf dem Dach 7 angeordneten Solarwärmekollektoren enthalten. Zusätzlich oder alternativ kann eine elektrische Heizeinrichtung 19 für die Erwärmung des Wassers vorgesehen sein. 21 bezeichnet den Kaltwasserzulauf, 23 den Warmwasserablauf des Flüssigkeitsbehälters. Es versteht sich, daß nicht jeder der den Warmwasserspeicher der Warmwassererzeugungsanlage bildenden Flüssigkeitsbehälter mit einer eigenen Heizeinrichtung versehen sein muß. Der Flüssigkeitsbehälter ist mit einer Isolierung 24 umgeben.

Fig. 3 zeigt einen als Wärmepufferspeicher ausgenutzten Flüssigkeitsbehälter 9''', der mit der Heizungsanlage 13 des Gebäudes verbunden ist. Der Flüssigkeitsbehälter 9''' ist auf seiner zur Gebäudeaußenseite weisenden Flachseite mit einer thermischen Isolierschicht 25 versehen und trägt auf seiner ins Gebäudeinneren weisenden Flachseite Radiatorrippen 27. Die Radiatorrippen 27 erlauben es, den Flüssigkeitsbehälter 9''' zugleich als Heizkörper oder Radiator der Gebäudeheizung mit auszunutzen. Gegebenenfalls kann auf der Gebäudeinnenseite eine Abdeckung 29 vor dem Flüssigkeitsbehälter 9''' angeordnet sein, um durch eine mechanische Klappe oder eine elektrische Zwangslüftung des dadurch zwischen der Abdeckung 29 und dem Behälter entstehenden Kanals 30 die Temperaturabgabe an den Innenraum des Gebäudes steuern zu können. Es versteht sich, daß die Radiatorrippen 27 entfallen können, wenn die Heizkörperfunktion nicht benötigt wird. Statt dessen kann auch auf der Gebäudeinnenseite die Flachseite mit einer thermischen Isolierung, ähnlich der Isolierschicht 25, versehen sein.

Fig. 4 zeigt eine Variante eines als Wärmespeicherelement für die Warmwassererzeugungsanlage oder die Heizungsanlage entsprechend dem Behälter 9'' bzw. 9''' ausnutzbaren Flüssigkeitsbehälters, wie er insbesondere zur Ausfachung der Sparren 5 des Dachs 7 eingesetzt werden kann. Fig. 4 zeigt einen Flüssigkeitsbehälter 9'''' in Form eines flachen Plattenelements, das auf seiner nach außen weisenden Flachseite 31 eine Vielzahl Wärmetauschrippen 33 trägt, die in einen durch eine Glasscheibe 35 abgedeckten Kollektorkasten 37 eines Solarkollektors hineinreichen. Der Flüssigkeitsbehälter 9 bildet damit eine Baueinheit mit einem in direktem Wärmetauschkontakt mit ihm stehenden, unmittelbar anschließenden Solarkollektor. Die Baueinheit ist, wie Fig. 1 zeigt, in die Dachfläche zwischen benachbarte Sparren 5 eingebaut und über Leitungen 39 mit der Heizungsanlage 13 verbunden. Es versteht sich, daß anstelle der Ausnutzung als Pufferspeicher der Heizungsanlage auch das Wärmespeicherelement der Warmwassererzeugungsanlage zu einer Einheit mit einem direkt daran anschließenden Solarkollektor verbunden werden kann. Der Wärmetauscher 17 aus Fig. 2 und/oder die elektrische Heizeinrichtung 19 kann gegebenenfalls entfallen.

Es versteht sich, daß sowohl die Dachfläche als auch die Wandflächen mit einer zusätzlichen Außenhautisolierung und Außenhautverkleidung versehen sein können, soweit dies eventuelle Solarwärmekollektoren nicht behindert.

Die Flüssigkeitsbehälter bestehen vorzugsweise aus Kunststoff, können aber auch aus Metall hergestellt sein.

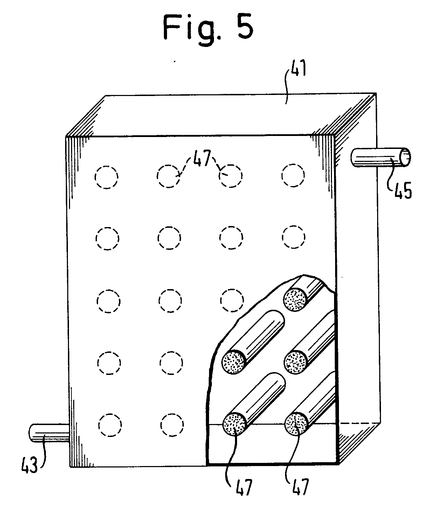

Fig. 5 zeigt eine Variante eines als Wärmepufferspeicher der Heizungsanlage 13 des Gebäudes einsetzbaren Flüssigkeitsbehälters 41. Der Flüssigkeitsbehälter 41 hat die Form eines flachen Rechteckquaders und umfaßt einen Zulauf 43 sowie einen Ablauf 45 für Wärmeträgerflüssigkeit. Die Wärmeträgerflüssigkeit kann unmittelbar in den Flüssigkeitsbehälter 41 geleitet sein oder indirekt über einen in dem Behälter 41 angeordneten Wärmetauscher in Wärmetauschkontakt mit einer Flüssigkeitsfüllung des Behälters 41 stehen.

Zur Erhöhung der Wärmespeicherkapazität sind in dem Behälter 41 eine Vielzahl im Abstand voneinander angeordneter Wärmespeicherkörper 47 vorgesehen, die sich zwischen den beiden Flachseiten des Behälters 41 erstrecken. Die Wärmespeicherkörper 47 bestehen aus mineralischem Material, insbesondere aus gebranntem Ton, Schamotte oder Keramik, und haben im dargestellten Ausführungsbeispiel die Form langgestreckter Zylinder. Sie können aber auch die Form zueinander paralleler Platten oder dergleichen haben. Nicht dargestellt, jedoch vorhanden sein können zusätzliche, gegebenenfalls elektrische Heizeinrichtungen. Der Flüssigkeitsbehälter 41 läßt sich auch als Speicherbehälter einer Warmwassererzeugungsanlage ausnutzen. Die Wärmespeicherkörper 47 verringern die zum Betrieb der Heizungsanlage bzw. der Warmwassererzeugungsanlage aufzubringende Heizleistung.

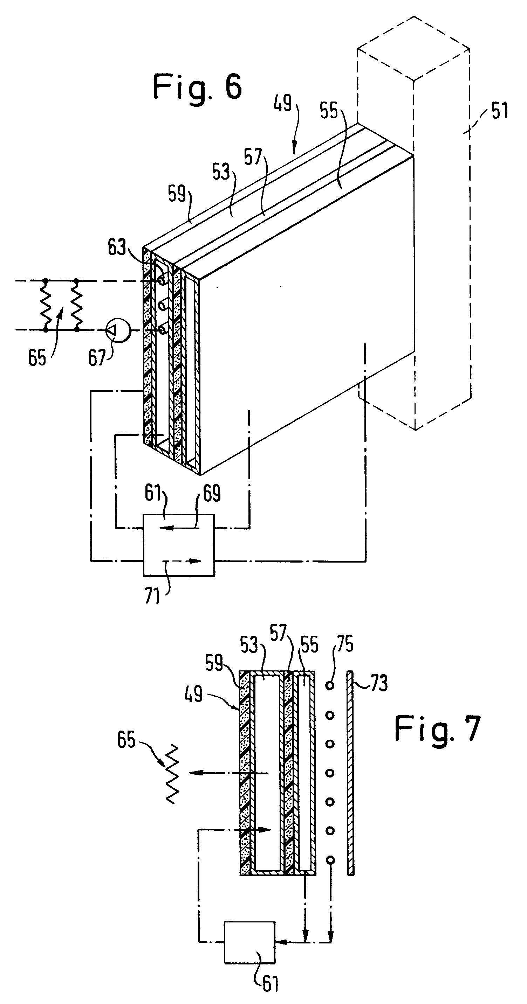

Fig. 6 zeigt eine weitere Variante, bei welcher den Flüssigkeitsbehältern 9 aus Fig. 1 entsprechend flache Flüssigkeitsbehälter 49 in Zwischenräume von Skelettstreben 51 der Außenwände oder des Dachs des Gebäudes eingesetzt sind. Der Flüssigkeitsbehälter 49 besteht aus zwei von einander gesonderten Flachbehältern 53, 55, die, ebenso wie die vorstehend erläuterten Flüssigkeitsbehälter im wesentlichen bis auf Zu- und Abflüsse vollständig geschlossen sind. Die Flachbehälter 53, 55 liegen sich mit ihren Flachseiten gegenüber und sind durch eine Platte 57 aus thermisch isolierendem Material voneinander getrennt. Während einer der Flachbehälter, hier der Behälter 53, dem Innenraum des Gebäudes zugekehrt ist und auf seiner Innenseite mit einer weiteren Platte 59 aus thermisch isolierendem Material belegt ist, bildet der Behälter 55 die Außenhaut des Gebäudes. Es versteht sich, daß der Flachbehälter 55 jedoch mit einer Fassadenverkleidung oder dergleichen belegt sein kann. Die Flachbehälter 53, 55 und die Platte 57 sowie gegebenenfalls auch die Platte 59 können zu einer für sich handhabbaren Baueinheit vereinigt sein, die als Ganzes zwischen die Skelettstreben 51 des Gebäudes eingebaut werden kann.

Die Flachbehälter 53, 55 werden zusammen mit einer Wärmepumpe 61 zur Gebäudeheizung ausgenutzt. Der auf der Außenseite des Gebäudes angeordnete Flachbehälter 55 wird durch Sonneneinstrahlung und Umgebungswärme des Gebäudes erwärmt und dient als Wärmequelle für die Wärmepumpe 61, an deren Ausgangsseite der Flachbehälter 53 als Wärmespeicher angeschlossen ist. Der Flachbehälter 53 enthält einen Wärmetauscher 63, beispielsweise in Form einer Rohrschlange oder dergleichen, an die ein Heizkörperkreis 65, vorzugsweise einer Fußbodenheizung oder dergleichen, über eine Umwälzpumpe 67 angeschlossen ist.

Wenngleich in Fig. 6 lediglich ein Flüssigkeitsbehälter 49 dargestellt ist, so können entsprechend Fig. 1 auch mehrere solcher Behälter vorgesehen sein, die untereinander parallel geschaltet an die Wärmepumpe 61 angeschlossen werden.

Zumindest ein Teil der Flüssigkeitsbehälter 49 kann auch zur Erzeugung von warmem Brauchwasser ausgenutzt werden, beispielsweise indem der Ausgang der Wärmepumpe 61 an den Wärmetauscher 63 angeschlossen wird, während der Flachbehälter 53 einen Speicherbehälter für Warmwasser bildet.

Für Heizungszwecke überträgt die Wärmepumpe 61 die Wärme in Richtung eines Pfeils 69 vom äußeren Flachbehälter 55 zum inneren Flachbehälter 53. Die Anordnung kann auch zur Kühlung des Gebäudes ausgenutzt werden, indem die Wärmeübertragungsrichtung der Wärmepumpe 61 entsprechend dem Pfeil 71 umgekehrt wird, so daß nunmehr Wärme vom inneren Flachbehälter 53 zum äußeren Flachbehälter 55 gepumpt wird. Es können Vorkehrungen getroffen sein, um die Wärme auf der Außenseite des Flachbehälters 55 abzugeben, aber auch die Wärme in dem Flachbehälter 55 kann gegebenenfalls wiedergewonnen werden, indem sie in dem Behälter gespeichert und beispielsweise zur Temperierung des Gebäudes in Nachtstunden ausgenutzt wird. Vorteilhaft ist es auch, wenn die Wärmepumpe 61 die dem Gebäudeinneren entzogene Wärme über einen nicht näher dargestellten Wärmetauscher ähnlich dem Wärmetauscher 63 an den Flüssigkeitsinhalt eines anderen Flachbehälters 55 abgibt, der dann als Warmwasserspeicher für die Brauchwassererwärmung ausgenutzt werden kann. In diesem Fall ist die Außenfläche dieses Flachbehälters 55 zweckmäßigerweise ebenfalls isoliert, um Wärmeverluste zu vermeiden.

Es versteht sich, daß bei ausreichend hohem Temperaturniveau des jeweils als Wärmequelle dienenden Flachbehälters anstelle einer Wärmepumpe auch eine simple Umwälzpumpe für den Wärmetransport von einem Flachbehälter in den anderen genügt.

Fig. 7 zeigt eine Variante für eine Ausnutzung des Flachbehälters 49, die sich von dem Ausführungsbeispiel der Fig. 6 im wesentlichen nur dadurch unterscheidet, daß vor die äußere Flachseite des außen gelegenen Flachbehälters 55 und im Abstand davon eine Fassadenverkleidung 73 gehängt ist und zwischen dem Flachbehälter 55 und der Fassadenverkleidung 73 Wärmetauschrohre 75 angeordnet sind, die zusätzlich zu dem Flachbehälter 55 als Wärmequelle in einem Flüssigkeitskreislauf an die Wärmepumpe 61 angeschlossen sind. Die Wärmetauschrohre 75 bilden zusammen mit der davon angeordneten Fassadenverkleidung 73 einen Sonnenkollektor, der zusammen mit dem äußeren Flachbehälter 55 die Wärmepumpe 61 speist. Zur Erläuterung des Aufbaus, der Wirkungsweise und der diversen Anwendungsmöglichkeiten des Flüssigkeitsbehälters 49 wird auf die Beschreibung der Fig. 6 Bezug genommen.

Die beiden Flachbehälter 53, 55 der Fig. 6 und 7 haben im wesentlichen gleiche Flachflächenkontur und haben, wenngleich auch Flachbehälter mit gleichen Flüssigkeitsaufnahmevolumen eingesetzt werden können, vorzugsweise unterschiedliches Volumen. Wie am besten Fig. 7 zeigt, ist der äußere Flachbehälter 55 flacher als der innere Flachbehälter 53, um eine raschere Erwärmung und ein höheres Temperaturniveau bei Verwendung als Wärmequelle zu erreichen.

## Patentansprüche

1. Plattenelement für den Bau einer Wand, insbesondere einer Außenwand (3) oder eines Dachs (7) eines zumindest zum Teil in Skelettbauweise zu errichtenden Gebäudes, bei welchen das Plattenelement einen Zwischenraum zwischen benachbarten Skelettstreben (1, 5; 51) des Gebäudes ausfacht,
**dadurch gekennzeichnet,** daß das Plattenelement als flacher, bis auf Öffnungen für Zufluß und Abfluß geschlossener Flüssigkeitsbehälter (9; 41; 49) ausgebildet ist.

2. Plattenelement nach Anspruch 1, dadurch gekennzeichnet, daß zumindest zwischen zwei benachbarten Skelettstreben (1; 5; 49) mehrere im wesentlichen unmittelbar benachbarte Flüssigkeitsbehälter (9) angeordnet sind.

3. Plattenelement nach Anspruch 1 oder 2, dadurch gekennzeichnet, daß zumindest eines der Plattenelemente einen Brauchwasser-Speicherbehälter (9') einer Brauchwasser-Versorgungsanlage, insbesondere einer Warmwasser-Versorgungsanlage, des Gebäudes bildet.

4. Plattenelement nach Anspruch 3, dadurch gekennzeichnet, daß der Brauchwasserbehälter (9') an eine Dachentwässerungsanlage (11) des Gebäudes angeschlossen ist.

5. Plattenelement nach Anspruche 3 oder 4, dadurch gekennzeichnet, daß der das Wärmespeicherelement (9'') bildende Flüssigkeitsbehälter einen Wasserspeicherbehälter der Warmwasser-Versorgungsanlage bildet und einen an eine Heizungsanlage und/oder Wärmepumpenanlage und/oder Solarkollektoranlage angeschlossenen Wärmetauscher (17) enthält und/oder mit einer elektrischen Heizeinrichtung (19) versehen ist.

6. Plattenelement nach einem der Ansprüche 1 bis 5, dadurch gekennzeichnet, daß zumindest eines der Plattenelemente ein Wärmespeicherelement (9'', 9'''; 41) einer Raumheizungsanlage des Gebäudes bildet.

7. Plattenelement nach Anspruch 6, dadurch gekennzeichnet, daß der Flüssigkeitsbehälter (9'''') Bestandteil des Dachs (7) ist und in unmittelbarem flächigen Wärmekontakt mit einem Solarwärmekollektor (37) steht.

8. Plattenelement nach einem der Ansprüche 1 bis 7, dadurch gekennzeichnet, daß der Flüssigkeitsbehälter (9''; 9''') auf zumindest einer seiner Flachseiten mit einer thermischen Isolierung (24; 25) versehen ist.

9. Plattenelement nach einem der Ansprüche 1 bis 8, dadurch gekennzeichnet, daß der Flüssigkeitsbehälter (9''') an eine Heizungsanlage (13) des Gebäudes angeschlossen ist, auf seiner gebäudeinneren Seite eine Wärmetauschfläche (27) bildet.

10. Plattenelement nach einem der Ansprüche 1 bis 9, dadurch gekennzeichnet, daß zumindest einer der Flüssigkeitsbehälter (49) wenigstens zwei mit ihren Flachseiten sich gegenüberliegende Flachbehälter (53, 55) zur gesonderten Speicherung von Flüssigkeit umfaßt, wobei zwischen den Flachbehältern (53, 55) eine thermische Isolierschicht (57), insbesondere eine Platte aus thermisch isolierendem Material, angeordnet ist.

11. Plattenelement nach Anspruch 10, dadurch gekennzeichnet, daß einer (55) der Flachbehälter der Außenseite des Gebäudes und der andere Flachbehälter (53) der Innenseite des Gebäudes zugekehrt zwischen den Skelettstreben (51) angeordnet ist und daß die Flachbehälter (53, 55) mit Wärmeübertragungsmitteln (61) verbunden sind, die die Übertragung des Flüssigkeits-Wärmeinhalts des äußeren Flachbehälters (55) in den inneren Flachbehälter (53) oder des inneren Flachbehälters (53) in den äußeren Flachbehälter (55) ermöglichen.

12. Plattenelement nach Anspruch 11, dadurch gekennzeichnet, daß die Wärmeübertragungsmittel einen direkten Flüssigkeitskreislauf zwischen den beiden Flachbehältern (53, 55) umfassen.

13. Plattenelement nach Anspruch 11, dadurch gekennzeichnet, daß die Wärmeübertragungsmittel eine Wärmepumpe (61) umfassen.

14. Plattenelement nach einem der Ansprüche 11 bis 13, dadurch gekennzeichnet, daß der innere Flachbehälter (53) mit einem Heizkörper (65) oder mit Fußbodenheizrohren direkt oder über einen in dem inneren Flachbehälter (53) angeordneten Wärmetauscher (63) verbunden ist und die Wärmeübertragungsmittel (61) den Wärmeinhalt vom äußeren (55) auf den inneren Flachbehälter (53) übertragen.

15. Plattenelement nach einem der Ansprüche 11 bis 14, dadurch gekennzeichnet, daß auf der Außenseite des äußeren Flachbehälters (55) und insbesondere im Abstand davon Fassadenverkleidungsplatten (73) angeordnet sind.

16. Plattenelement nach Anspruch 15, dadurch gekennzeichnet, daß zwischen der Außenseite des äußeren Flachbehälters (55) und den Fassadenverkleidungsplatten (73) Wärmetauschrohre (75) angeordnet sind, die zusammen mit dem äußeren Flachbehälter (55) eine Wärmequelle für eine den inneren Flachbehälter (53) speisende Wärmepumpe (61) bilden.

17. Plattenelement nach einem der Ansprüche 1 bis 16, dadurch gekennzeichnet, daß der Flüssigkeitsbehälter (9; 41; 49) aus Kunststoff besteht.

18. Als Flüssigkeitsbehälter ausgebildetes Wärmespeicherelement insbesondere in Form eines Plattenelements nach einem der Ansprüche 1 bis 17, dadurch gekennzeichnet, daß in dem flüssigkeitsdichte Wände insbesondere aus Kunststoffmaterial umfassenden Flüssigkeitsbehälter (41) wenigstens ein in direktem Wärmetauschkontakt mit der Flüssigkeit stehender Wärmespeicherkörper (47) aus festem, mineralischem Material angeordnet ist.

19. Wärmespeicherelement nach Anspruch 18, dadurch gekennzeichnet, daß in dem Flüssigkeitsbehälter (41) eine Vielzahl im Abstand voneinander angeordnete Wärmespeicherkörper (47) angeordnet ist.

20. Wärmespeicherelement nach Anspruch 19, dadurch gekennzeichnet, daß der Flüssigkeitsbehälter (41) als flacher, im wesentlichen plattenförmiger Behälter ausgebildet ist und daß sich die Wärmespeicherkörper (47) im Abstand nebeneinander zwischen den Flachseitenwänden des Behälters (41) erstrecken.

21. Wärmespeicherelement nach einem der Ansprüche 18 bis 20, dadurch gekennzeichnet, daß die Wärmespeicherkörper (47) aus gebranntem Ton, Schamotte oder aus Keramik bestehen.
